# EUROPÄISCHE PATENTSCHRIFT

(11) **EP 2 920 063 B1**
(45) Veröffentlichungstag und Bekanntmachung des Hinweises auf die Patenterteilung: **08.08.2018**
(21) Anmeldenummer: 13789543.9
(22) Anmeldetag: 11.11.2013
(51) Int. Cl.: B63H 25/26, B63G 8/18, H02K 7/00, H02K 7/10

(54) **UNTERSEEBOOT**
SUBMARINE
SOUS-MARIN

(30) Priorität: 15.11.2012 DE 102012220918
(43) Veröffentlichungstag der Anmeldung: 23.09.2015
(73) Patentinhaber: ThyssenKrupp Marine Systems GmbH, 24143 Kiel (DE)
(72) Erfinder: BRUHN, Christian, 24768 Rendsburg (DE)
(74) Vertreter: thyssenkrupp Intellectual Property GmbH
(86) Internationale Anmeldenummer: PCT/EP2013/073469
(87) Internationale Veröffentlichungsnummer: WO 2014/076025

(56) Entgegenhaltungen:
- DE-A1- 10 158 870
- DE-U1-202005 005 848
- GB-A- 191 210 241
- GB-A- 191 327 471
- US-A- 1 213 153

## Beschreibung

Unterseeboote sind bislang meist mit hydraulischen Rudermaschinen ausgerüstet. Diese Rudermaschinen werden von einer in dem Unterseeboot zentral angeordneten Hydraulikanlage mit Hydraulikflüssigkeit versorgt. Aus Sicherheitsgründen ist die Hydraulikanlage in der Regel mehrfach redundant aufgebaut. Sollte es dennoch zu einem Ausfall der Hydraulikanlage kommen, der die Versorgung der Rudermaschine mit Hydraulikflüssigkeit verhindert, steht üblicherweise zusätzlich eine druckluftbetriebene Hydraulikpumpe zur Verfügung, die die Versorgung der Rudermaschine mit der Hydraulikflüssigkeit dann gewährleistet. Selbst bei Versagen dieser druckluftbetriebenen Hydraulikpumpe kann der Rudermaschine die erforderliche Hydraulikflüssigkeit noch mit Handpumpen zugeführt werden.

Eine Alternative zu den hydraulischen Rudermaschinen stellen Rudermaschinen mit einem elektrischen Stellmotor dar, wie er beispielsweise aus DE 10 2010 015 665 A1 bekannt ist. Bei diesem Stellmotor ist dessen Ruder mit einem Spindeltrieb bewegungsgekoppelt, wobei der linear bewegliche Teil des Spindeltriebs, bei dem es sich wahlweise um die Spindel oder um die Spindelmutter handeln kann, über ein Gelenkgestänge auf das Ruder wirkt. Probleme ergeben sich allerdings bei einem Ausfall des Stellmotors, da dann eine Betätigung des Ruders nicht mehr möglich ist. Die DE 101 58 870 A1 beschreibt eine redundante, elektrische Antriebsvorrichtung zum Antrieb eines Schiffsruders. DE 20 2005 005 848 U1 offenbart ein Unterseeboot mit einem elektrischen Stellmotor, welcher mit dem Ruder bewegungsgekoppelt ist, und mit einem Hilfsantrieb. Vor diesem Hintergrund liegt der Erfindung die Aufgabe zugrunde, ein Unterseeboot, dessen Ruderanlage bzw. Ruderanlagen, die mit einem elektrischen Stellmotor ausgestattet sind, so zu verbessern, dass das bzw. die Ruder auch beim Ausfall des Stellmotors betätigt werden können.

Gelöst wird diese Aufgabe durch ein Unterseeboot mit den in Anspruch 1 angegebenen Merkmalen. Vorteilhafte Weiterbildungen dieses Unterseeboots ergeben sich aus den Unteransprüchen, der nachfolgenden Beschreibung sowie der Zeichnung. Hierbei können die in den Unteransprüchen angegebenen Merkmale jeweils für sich aber auch in geeigneter Kombination miteinander die erfindungsgemäße Lösung nach Anspruch 1 weiter ausgestalten.

Das erfindungsgemäße Unterseeboot weist in üblicher Weise einen Druckkörper und mindestens eine Ruderanlage auf, die mindestens ein außerhalb des Druckkörpers angeordnetes Ruder, bei dem es sich um ein Seitenruder oder um ein Tiefenruder handeln kann und einen mit dem Ruder bewegungsgekoppelten Antrieb aufweist. Bei diesem Antrieb handelt es sich um einen elektrischen Stellmotor und vorzugsweise um einen Synchron-Torque-Motor, dessen Rotor mit einem drehbeweglichen Teil eines Spindeltriebs verbunden ist. Ein linearbeweglicher Teil des Spindeltriebs, bei dem es sich vorzugsweise um die Spindel handelt, ist durch eine Druckkörperdurchführung nach außerhalb des Druckkörpers geführt, wo dieser Teil des Spindeltriebs in bekannter Weise über ein Gelenkgestänge mit dem Ruderschaft des Ruders bewegungsgekoppelt ist.

Um das Ruder auch bei einem Defekt des Stellmotors oder bei einem Ausfall der Spannungsversorgung des Stellmotors betätigen zu können, ist an dem Stellmotor ein Hilfsantrieb vorgesehen. Die Anordnung des Hilfsantriebs an den Stellmotor ist derart, dass ein von dem Hilfsantrieb erzeugtes Drehmoment unmittelbar oder mittelbar über ein Getriebe auf den Rotor des Stellmotors übertragen werden kann, so dass die Rudereinstellung über den Hilfsantrieb erfolgt. Dieser Hilfsantrieb kann vorteilhaft ein fester Bestandteil des Stellmotors sein, so dass der Stellmotor und der Hilfsantrieb eine gemeinsame Baueinheit bilden. Alternativ hierzu kann der Hilfsantrieb ein von dem Stellmotor separates Aggregat sein, welches nur bei Bedarf, d. h. bei einem Ausfall des Stellmotors an diesen angekoppelt wird, wobei der Stellmotor in letztgenanntem Fall eine hierfür geeignete Koppeleinrichtung aufweist.

Als Hilfsantrieb können prinzipiell alle hierfür geeigneten Antriebsmotoren eingesetzt werden. So können z. B. elektrisch oder hydraulisch betätigte Motoren als Hilfsantrieb mit dem Rotor verbunden bzw. verbindbar sein. Daneben ist auch ein Handantrieb in Form eines mit dem Rotor verbundenen Handrads oder eine Kurbel als Hilfsantrieb denkbar. Bevorzugt ist als Hilfsantrieb aber ein Druckluftmotor vorgesehen. Dieser ist zweckmäßigerweise an dem in Unterseebooten üblicherweise vorhandenen Druckluftnetz angeschlossen. Vorteilhaft ist dem Druckluftmotor ein Planetengetriebe nachgeschaltet, um die vergleichsweisen hohen Betriebsdrehzahlen des Druckluftmotors herabzusetzen. Solche Druckluftmotoren mit einem nachgeschalteten Planetengetriebe sind am Markt als kompakte Baueinheit erhältlich.

Zweckmäßigerweise ist die Verbindung des Hilfsantriebs mit dem Rotor des Stellmotors an einem von dem Antriebsende des Rotors abgewandten Ende des Rotors vorgesehen. Hierbei ist unter dem Antriebsende des Rotors das Ende des Rotors zu verstehen, an dem der Spindeltrieb mit dem Rotor verbunden ist. Die Verbindung des Hilfsantriebs erfolgt demnach vorzugsweise an einem von dem Spindeltrieb abgewandten Ende des Rotors, das zweckmäßigerweise aus dem Stator des Stellmotors herausragt. Erfindungsgemäß ist der Hilfsantrieb nicht direkt mit dem Rotor des Stellmotors verbunden bzw. verbindbar. Stattdessen ist zur Verbindung des Hilfsantriebs mit dem Rotor des Stellmotors ein Getriebe vorgesehen. Bei dem Getriebe kann es sich beispielsweise um ein Untersetzungsgetriebe handeln, mit dem die Drehzahl des Hilfsantriebs auf eine niedrigere Rotordrehzahl bei gleichzeitiger Erhöhung des auf den Rotor wirkenden Drehmoments herunter transformiert wird.

Grundsätzlich können zur Drehmomentübertragung von dem Hilfsantrieb zu dem Rotor alle hierfür geeigneten Getriebe verwendet werden. Bevorzugt ist das Getriebe allerdings ein Zahnradgetriebe. Dieses ist vorzugsweise als ein Stirnradgetriebe ausgebildet, so dass eine Antriebswelle des Hilfsantriebs parallel zu dem Rotor des Stellmotors ausgerichtet ist. Insbesondere bei einer Ausgestaltung, bei der der Hilfsantrieb fester Bestandteil des Stellmotors ist, weist der Stellmotor erfindungsgemäß eine lösbare Kupplung auf, die zwischen einem mit dem Hilfsantrieb verbundenen Antriebsstrang des Getriebes und einem mit dem Rotor verbundenen Abtriebsstrang des Getriebes angeordnet ist. Diese Kupplung ist vorteilhaft dafür vorgesehen, die Verbindung des Hilfsantriebs mit dem Rotor des Stellmotors bei intaktem Stellmotor zu lösen und den Hilfsantrieb nur bei einem Ausfall des Stellmotors mit dem Rotor des Stellmotors zu verbinden.

In vorteilhafter Weiterbildung dieser Ausgestaltung ist eine Hülse mit einem daran ausgebildeten Flansch, d. h. mit einem sich über den gesamten Umfang der Hülse erstreckenden radial auskragenden Kragen, drehfest mit dem Rotor verbunden. An einer Flachseite des Flansches ist mit dieser ein Zahnradring formschlüssig verbindbar. Hierbei kommt der Zahnradring, der vorzugsweise mit einer Außenverzahnung versehen ist, mit einer seiner Stirnseiten an der Flachseite des Flansches zur Anlage, wobei Formschlusselemente an den Zahnradring und an der Flachseite des Flansches die formschlüssige Verbindung von Zahnradring und Flansches schaffen. Der Zahnradring ist Teil eines Zahnradgetriebes, über das der Hilfsantrieb mit dem Rotor des Stellmotors verbindbar bzw. verbunden ist. Der Zahnradring und der Flansch der Hülse bilden hierbei eine lösbare Kupplung, bei der der Zahnradring zur Trennung der Verbindung zwischen dem Hilfsantrieb und dem Rotor von dem an der Hülse ausgebildeten Flansch wegbewegt wird. Umgekehrt wird zum Verbinden des Hilfsantriebs mit dem Rotor des Stellmotors der Flansch der Hülse zur Bildung eines Formschlusses zwischen den Zahnradring und der Erweiterung mit dem Zahnradring in Kontakt gebracht.

Zur Bildung eines Formschlusses zwischen dem Zahnradring und dem Flansch können der Flansch und der Zahnradring vorteilhaft eine Klauenkupplung bilden. Demnach sind an dem Zahnradring und/oder dem Flansch an der Stirn- bzw. Flachseite vorstehende Klauen ausgebildet, die in Ausnehmungen an dem jeweils anderen Teil von Zahnradring und Flansch eingreifen oder einen dort ausgebildeten Vorsprung formschlüssig hintergreifen. Mit der so gebildeten Klauenkupplung lassen sich besonders gut Drehmomente von dem Hilfsantrieb auf die Hülse und damit einhergehend auf den Rotor des Stellmotors übertragen.

Eine gleichermaßen gute Drehmomentübertragung ermöglicht auch eine Hirth-Verzahnung. So können der Flansch und der Zahnradring, anstatt eine Klauenkupplung zu bilden, vorteilhaft auch jeweils an einer Flachseite eine Hirth-Verzahnung aufweisen. Demzufolge ist stirnseitig des Zahnradrings und des Flansches jeweils eine Verzahnung ausgebildet, wobei die beiden Verzahnungen zur formschlüssigen Verbindung von Zahnradring und Flansch miteinander in Eingriff gebracht werden.

Vorzugsweise ist vorgesehen, dass der Hilfsantrieb bei einem Normalbetrieb des Stellmotors nicht mit dessen Rotor verbunden ist, wobei der Zahnradring von dem Flansch getrennt ist, so dass kein Formschluss zwischen dem Zahnradring und dem Flansch besteht. Zu diesem Zweck weist der Stellmotor vorteilhafterweise ein Federelement auf, welches vorgespannt derart angeordnet ist, dass es die formschlüssige Verbindung von Hülse und Zahnradring trennt.

Nachfolgend ist die Erfindung anhand eines in der Zeichnung dargestellten Ausführungsbeispiels näher erläutert. In der Zeichnung zeigt:
- Fig. 1: in einer schematisch vereinfachten Seitenansicht einen Stellmotor einer Ruderanlage eines Unterseeboots mit einem daran angeordneten Hilfsantrieb,
- Fig. 2: eine Schnittansicht entlang der Schnittlinie II - II in Fig. 1 und
- Fig. 3: stark vergrößert eine Einzelheit III aus Fig. 1.

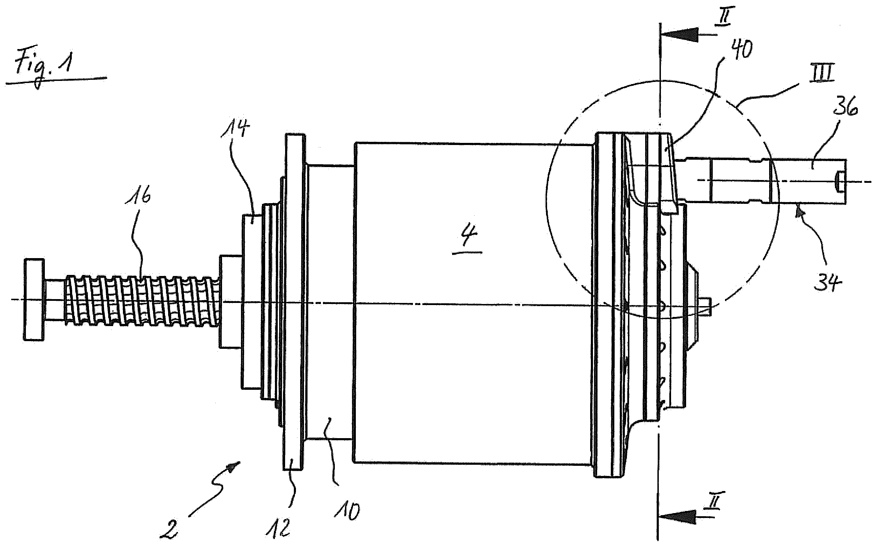

Der in Fig. 1 dargestellte elektrische Stellmotor 2 ist Teil einer Ruderanlage eines Unterseeboots, mit der ein außerhalb des Druckkörpers des Unterseeboots angeordnetes Ruder gestellt wird. Bei dem Ruder kann es sich um ein Seitenruder oder um ein Tiefenruder des Unterseeboots handeln. Von der gesamten Ruderanlage ist nur der elektrische Stellmotor dargestellt.

Ein Motorgehäuse des Stellmotors 2 weist einen hohlzylindrischen Grundkörper 4 auf. In dem Grundkörper 4 des Stellmotors 2, bei dem es sich um einen Synchron-Torque-Motor handelt, sind ein Stator 6 und ein hohl ausgebildeter Rotor 8 des Stellmotors 2 angeordnet. An dem Grundkörper 4 schließt sich in Fig. 1 linksseitig ein Flanschteil 10 an. Über einen Flansch 12 des Flanschteils 10 ist der Stellmotor 2 druckdicht an einer Druckkörperdurchführung des Unterseeboots befestigt.

An einer von dem Grundkörper 4 abgewandten Stirnseite des Flansches 12 ragt aus dem Flanschteil 10 eine mit dem Rotor 8 des Stellmotors 2 fest verbundene Spindelmutter 14 eines Plantenrollenspindeltriebs aus dem Motorgehäuse heraus. Durch die Spindelmutter 14, die bei Drehung des Rotors 8 des Stellmotors 2 die Drehbewegung des Rotors 8 ausführt, führt eine linearbewegbare Planetenrollenspindel 16 des Planetenrollenspindeltriebs in das Innere des Spindelmotors 2. Der außerhalb des Spindelmotors 2 befindliche Teil der Planetenrollenspindel 16 ist durch die Druckkörperdurchführung nach außerhalb des Druckkörpers des Unterseeboots geführt und ist dort mit einem Gelenkgestänge verbunden, welches wiederum mit dem von der Ruderanlage zustellenden Ruder bewegungsgekoppelt ist.

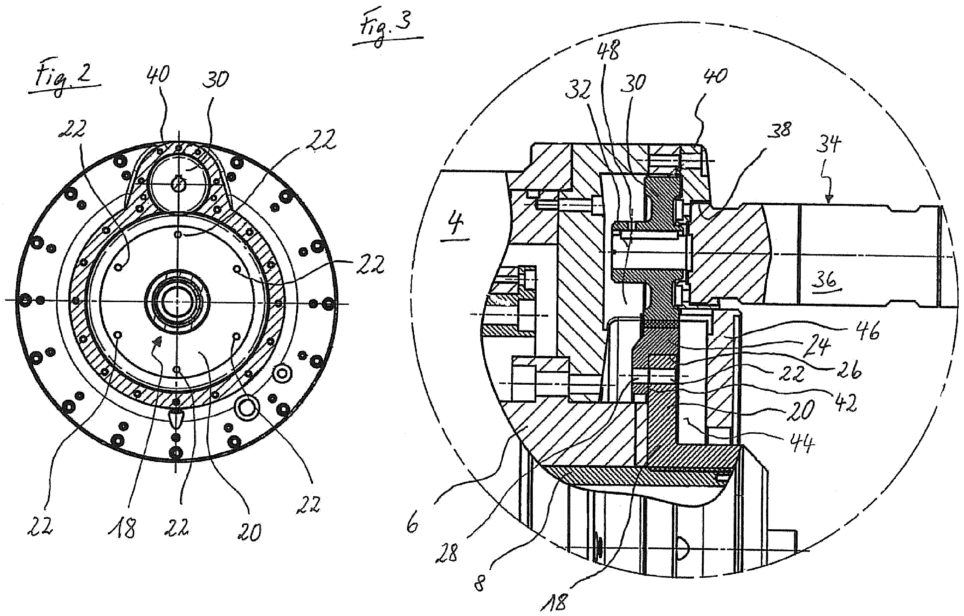

Wie in Fig. 3 dargestellt, ragt ein von dem Planetenrollenspindeltrieb abgewandtes Ende des Rotors 8 aus dem Stator 6 heraus. Auf dieses Ende des Rotors 8 ist eine Hülse 18 aufgesetzt und drehfest mit dem Rotor 8 verbunden. Die Hülse 18 dreht somit bei einer Drehung des Rotors 8 mit dem Rotor 8 mit. An ihrem dem Stator 6 zugewandten Ende weist die Hülse 18 einen Flansch 20 auf. Bei dem Flansch 20 handelt es sich um einen ringförmigen Kragen, der sich ausgehend von der äußeren Mantelfläche der Hülse 18 radial nach Außen erstreckt. An dem Flansch 20 sind gleichmäßig über deren Umfang verteilt sechs Bohrungen 22 ausgebildet. Diese Bohrungen 22 sind zur Aufnahme von nicht dargestellten Schrauben vorgesehen, mit denen ein Zahnradring 24 an dem Flansch 20 befestigt ist.

Zur Befestigung an dem Flansch 20 der Hülse 18 weist der Zahnradring 24 an einer Stirnseite, die von dem Plantenrollenspindeltrieb abgewandt ist, eine Ausnehmung 26 auf. Der Querschnitt in der Ausnehmung 26 korrespondiert mit der Außenkontur des Flansches 20. Die Tiefe der Ausnehmung 26 ist so bemessen, dass eine von dem Stator 6 abgewandte Flachseite des Flansches 20 mit der Stirnseite des Zahnradrings 24 fluchtet. Korrespondierend zur Lage der an dem Flansch 20 ausgebildeten Bohrungen 22 sind auch an dem Zahnradring 24 sechs Bohrungen 28 zur Verschraubung des Zahnradrings 24 mit dem Flansch 20 ausgebildet.

Der Zahnradring 24 ist an seinem Außenumfang mit einer Verzahnung versehen, die mit einem Zahnrad 30 gekämmt wird. Das Zahnrad 30 ist über eine Passfeder-Nut-Verbindung mit einer Antriebswelle 32 eines Hilfsantriebs 34 verbunden. Bei dem Hilfsantrieb 34 handelt es sich um einen Druckluftmotor mit einem nachgeschalteten Planetengetriebe.

Der Hilfsantrieb 34 ist nicht fester Bestandteil des Stellmotors 2 und wird nur bei einem Ausfall des Stellmotors 2 mit dem Zahnrad 30 gekoppelt. In diesem Fall durchgreift ein an die Antriebswelle 32 anschließender Abschnitt eines Gehäuses 36 des Hilfsantriebs 34 eine Durchbrechung 38, die an einem Anschlussteil 40 ausgebildet ist, welches axial außenseitig des Zahnrads 30 an der von dem Planetenrollenspindeltrieb abgewandten Stirnseite des Motorgehäuses des Stellmotors 2 angeordnet ist. An dem Anschlussteil 40 ist der Hilfsantrieb 34 festgelegt.

Alternativ zu der in der Zeichnung dargestellten Ausgestaltung ist der Zahnradring 24 nicht mittels einer Schraubverbindung mit dem Flansch 20 der an dem Rotor 8 befestigten Hülse 18 fest verbunden. Stattdessen bilden der Flansch 20 und der Zahnradring 24 in einem Kontaktbereich 42 in der an dem Zahnradring 24 ausgebildeten Ausnehmung 26 eine lösbare Kupplung. Hierzu kann an der Bodenfläche der Ausnehmung 26 und an dem diese Bodenfläche kontaktierenden Bereich des Flansches 20 eine Klauenverzahnung zur Bildung einer Klauenkupplung oder eine Hirth-Verzahnung ausgebildet sein. In diesem Fall kann der Hilfsantrieb fester Bestandteil des Stellmotors 2 sein, also dauerhaft an dem Anschlussteil 40 festgelegt sein, wobei aber bei Normalbetrieb des Stellmotors 2 keine formschlüssige Verbindung zwischen dem Zahnradring 24 und dem Flansch 20 der Hülse 18 bzw. dem Rotor 8 bestehen soll. Zu diesem Zweck ist in einem Raum 44, der an der von dem Planentenrollenspindeltrieb abgewandten Seite des Flansches 20 und des Zahnradrings 24 ausgebildet ist, und außenseitig von einer die Hülse 18 radial umgebenden Abdeckgehäuse 46 begrenzt wird, ein nicht dargestelltes Federelement angeordnet, dass sich vorgespannt zwischen dem Abdeckgehäuse 46 und dem Zahnradring 24 abstützt und den Zahnradring 24 von dem Flansch 20 wegdrückt, so dass keine formschlüssige Verbindung zwischen dem Zahnradring 24 und dem Flansch 20 besteht. Bei einem Ausfall des Stellmotors 2 wird mit dem Druckluftmotor des Hilfsantriebs 34 Druckluft in einen freien Raum 48 geleitet, der an der dem Planetenrollenspindeltriebs zugewandten Seite des Zahnrads 30 und des Zahnradrings 24 ausgebildet ist und hierdurch der Zahnradring 24 gegen die Federkraft des in dem Raum 44 angeordneten Federelements in Richtung des Flansches 20 gedrückt, wo sich der Zahnradring 24 formschlüssig mit dem Flansch 20 verbindet, so dass nun eine Bewegungskopplung des Hilfsantriebs 34 mit dem Rotor 8 des Stellmotors 2 besteht.

### Bezugszeichenliste

- 2: - Stellmotor
- 4: - Grundkörper
- 6: - Stator
- 8: - Rotor
- 10: - Flanschteil
- 12: - Flansch
- 14: - Spindelmutter
- 16: - Planetenrollenspindel
- 18: - Hülse
- 20: - Flansch
- 22: - Bohrung
- 24: - Zahnradring
- 26: - Ausnehmung
- 28: - Bohrung
- 30: - Zahnrad
- 32: - Antriebswelle
- 34: - Hilfsantrieb
- 36: - Gehäuse
- 38: - Durchbrechung
- 40: - Anschlussteil
- 42: - Kontaktbereich
- 44: - Raum
- 46: - Abdeckgehäuse
- 48: - Raum

## Patentansprüche

1. Unterseeboot mit einem Druckkörper, mit mindestens einem außerhalb des Druckkörpers angeordneten Ruder und mit einem in dem Druckkörper angeordneten elektrischen Stellmotor (2), welcher mit dem Ruder bewegungsgekoppelt ist und an welchem ein Hilfsantrieb (34) vorgesehen ist **dadurch gekennzeichnet, dass** zur Verbindung des Hilfsantriebs (34) mit dem Rotor (8) des Stellmotor (2) ein Getriebe vorgesehen ist, und dass der Stellmotor (2) eine lösbare Kupplung aufweist, die zwischen einem mit dem Hilfsantrieb (34) verbundenen Antriebsstrang des Getriebes und einem mit dem Rotor (8) verbundenen Abtriebsstrang des Getriebes anneordnet ist

2. Unterseeboot nach Anspruch 1, **dadurch gekennzeichnet, dass** eine Verbindung des Hilfsantriebs (34) mit einem Rotor (8) des Stellmotors (2) an einem von dem Antriebsende des Rotors (8) abgewandten Ende des Rotors (8) vorgesehen ist.

3. Unterseeboot nach Anspruch 2, **dadurch gekennzeichnet, dass** das Getriebe ein Zahnradaetriebe ist.

4. Unterseeboot nach einem der vorangehenden Ansprüche, **dadurch gekennzeichnet, dass** der Hilfsantrieb (34) fester Bestandteil des Stellmotors (2) ist.

5. Unterseeboot nach einem der vorangehenden Ansprüche, **dadurch gekennzeichnet, dass** der Hilfsantrieb (34) einen Druckluftmotor aufweist.

6. Unterseeboot nach einem der vorangehenden Ansprüche, **dadurch gekennzeichnet, dass** mit dem Rotor (8) eine Hülse (18) drehfest verbunden ist, welche einen Flansch (20) aufweist, wobei ein Zahnradring (24) an einer Flachseite des Flansches (20) formschlüssig mit der Hülse (18) kupplungsverhindbar ist

7. Unterseeboot nach Anspruch 6, **dadurch gekennzeichnet, dass** der Flansch (20) und der Zahnradring (24) eine Klauenkiupplung hilden.

8. Unterseeboot nach Anspruch 6, **dadurch gekennzeichnet, dass** der Flansch (20) und der Zahnradring (24) jeweils an einer Flanhseite eine Hirth-Verzahnung aufweist.

9. Unterseeboot nach einem der Ansprüche 6 bis 8, **dadurch gekennzeichnet, dass** der Stellmotor (2) ein Federelement aufweist, welches vorgespannt derart angeordnet ist, dass es die formschlüssige Verbindung von Hülse (18) und Zahnradring (24) trennt.

## Claims

1. Submarine having a pressure hull, having at least one rudder situated outside the pressure hull and having an electric servomotor (2), which is arranged in the pressure hull, is motion-coupled to the rudder, and on which an auxiliary drive (34) is provided, **characterized in that** a transmission is provided to connect the auxiliary drive (34) to the rotor (8) of the servomotor (2), and **in that** the servomotor (2) has a releasable clutch, which is arranged between a transmission drive train connected to the auxiliary drive (34) and a transmission drive train connected to the rotor (8).

2. Submarine according to Claim 1, **characterized in that** a connection between the auxiliary drive (34) and the rotor (8) of the servomotor (2) is provided at an end of the rotor (8) remote from the driving end of the rotor (8).

3. Submarine according to Claim 2, **characterized in that** the transmission is a gear mechanism.

4. Submarine according to one of the preceding claims, **characterized in that** the auxiliary drive (34) is an integral part of the servomotor (2).

5. Submarine according to one of the preceding claims, **characterized in that** the auxiliary drive (34) has a compressed air motor.

6. Submarine according to one of the preceding claims, **characterized in that** a sleeve (18), which has a flange (20), is connected for conjoint rotation to the rotor (8), wherein a gear ring (24) can be connected positively by a clutch action to the sleeve (18) on a flat side of the flange (20).

7. Submarine according to Claim 6, **characterized in that** the flange (20) and the gear ring (24) form a claw clutch.

8. Submarine according to Claim 6, **characterized in that** the flange (20) and the gear ring (24) each have serrations on a flat side.

9. Submarine according to one of Claims 6 to 8, **characterized in that** the servomotor (2) has a spring element, which is arranged in a preloaded manner in such a way that it divides the positive connection between the sleeve (18) and the gear ring (24).

## Revendications

1. Sous-marin comprenant une coque pressurisée, au moins un gouvernail disposé à l'extérieur de la coque pressurisée et un moteur de commande électrique (2) disposé dans la coque pressurisée, qui est en liaison mobile avec le gouvernail et au niveau duquel est prévu un entraînement auxiliaire (34),
**caractérisé en ce**
**qu'**une transmission est prévue pour relier l'entraînement auxiliaire (34) au rotor (8) du moteur de commande (2), et **en ce que** le moteur de commande (2) présente un accouplement libérable qui est disposé entre un groupe motopropulseur de la transmission raccordé à l'entraînement auxiliaire (34) et un train de sortie de la transmission raccordé au rotor (8).

2. Sous-marin selon la revendication 1, **caractérisé en ce qu'**une liaison de l'entraînement auxiliaire (34) à un rotor (8) du moteur de commande (2) est prévue au niveau d'une extrémité du rotor (8) opposée à l'extrémité d'entraînement du rotor (8).

3. Sous-marin selon la revendication 2, **caractérisé en ce que** la transmission est une transmission à engrenages.

4. Sous-marin selon l'une quelconque des revendications précédentes, **caractérisé en ce que** l'entraînement auxiliaire (34) est un composant fixe du moteur de commande (2).

5. Sous-marin selon l'une quelconque des revendications précédentes, **caractérisé en ce que** l'entraînement auxiliaire (34) présente un moteur à air comprimé.

6. Sous-marin selon l'une quelconque des revendications précédentes, **caractérisé en ce qu'**une douille (18) est raccordée de manière solidaire en rotation au rotor (8), laquelle douille présente une bride (20), une bague de roue dentée (24) pouvant être raccordée par accouplement par engagement par correspondance de formes avec la douille (18) au niveau d'un côté plat de la bride (20).

7. Sous-marin selon la revendication 6, **caractérisé en ce que** la bride (20) et la bague de roue dentée (24) forment un accouplement à griffes.

8. Sous-marin selon la revendication 6, **caractérisé en ce que** la bride (20) et la bague de roue dentée (24) présentent chacune une denture de Hirth au niveau d'un côté plat.

9. Sous-marin selon l'une quelconque des revendications 6 à 8, **caractérisé en ce que** le moteur de commande (2) présente un élément de ressort qui est disposé de manière précontrainte de telle sorte qu'il sépare le raccordement par engagement par correspondance de formes de la douille (18) et de la bague de roue dentée (24).
